# EUROPÄISCHE PATENTSCHRIFT

(11) **EP 2 971 810 B1**
(45) Veröffentlichungstag und Bekanntmachung des Hinweises auf die Patenterteilung: **29.05.2019**
(21) Anmeldenummer: 14719181.1
(22) Anmeldetag: 12.03.2014
(51) Int. Cl.: F16B 12/14, E05F 1/10

(54) **MÖBELBESCHLAG MIT BEFESTIGUNGSVORRICHTUNG**
FURNITURE FITTING WITH SECURING DEVICE
FERRURE DE MEUBLE AVEC DISPOSITIF DE FIXATION

(30) Priorität: 13.03.2013 AT 1932013
(43) Veröffentlichungstag der Anmeldung: 20.01.2016
(73) Patentinhaber: Julius Blum GmbH, 6973 Höchst (AT)
(72) Erfinder: HÄMMERLE, Kurt, 6890 Lustenau (AT)
(74) Vertreter: Torggler & Hofinger Patentanwälte
(86) Internationale Anmeldenummer: PCT/AT2014/000047
(87) Internationale Veröffentlichungsnummer: WO 2014/138760

(56) Entgegenhaltungen:
- WO-A1-2013/029070
- CN-Y- 2 844 538
- DE-C1- 3 641 290
- DE-U1-202010 014 948
- GB-A- 2 427 646
- US-B1- 6 457 922

## Beschreibung

Die Erfindung betrifft einen Möbelbeschlag nach dem Oberbegriff des Anspruch 1.

Weiters betrifft die Erfindung ein Möbel mit einem solchen Möbelbeschlag.

Eine Befestigungsvorrichtung zum Befestigen eines Möbelbeschlags wird zum Beispiel in der DE 20 2010 014 948 U1 gezeigt. Mit Hilfe dieser Befestigungsvorrichtung wird ein Möbelbeschlag - der hier als Stellantrieb für eine Möbelklappe ausgebildet ist - an einem Möbelkorpus befestigt. Der Stellantrieb ist dabei derart ausgebildet, dass er sowohl an der linken Seite als auch an der rechten Seite des Möbelkorpus befestigt werden kann und somit mit einer Ausführung des Stellantriebes beide Montagepositionen realisiert werden können.

Dazu weist die Befestigungsvorrichtung eine durchgehende Öffnung von einer Stellantriebsseite zur anderen auf. In dieser durchgehenden Öffnung ist ein Verbindungselement platziert und der Stellantrieb wird mittels dieses Verbindungselementes an der jeweiligen Möbelkorpusseite befestigt.

Die WO 2013/029070 A1, die CN 2 844 538 Y, die DE 36 41 290 C1, die US 6 457 922 B1 sowie die GB 2 427 646 A stellen weiteren Stand der Technik dar.

Aufgabe der Erfindung ist es, einen gegenüber dem Stand der Technik verbesserten Möbelbeschlag und ein Möbel mit einem solchermaßen verbesserten Möbelbeschlag anzugeben.

Diese Aufgabe wird durch einen Möbelbeschlag mit den Merkmalen des Anspruchs 1 und ein Möbel mit den Merkmalen des Anspruchs 12 gelöst.

Dadurch, dass das Verbindungselement wenigstens ein Anschlagelement aufweist, das relativ zu dem Verbindungselement begrenzt bewegbar ist, kann das Anschlagelement in zwei unterschiedlichen Positionen - relativ zum Verbindungselement - als Anschlag dienen, mit dem die Befestigungsvorrichtung und somit der Möbelbeschlag am Möbel befestigbar ist.

Dadurch ist eine äußerst kompakte Befestigungsvorrichtung verwirklicht, bei der durch die Ausbildung des Anschlagelements der Möbelbeschlag positionssicher am Möbel befestigt werden kann. Des weiteren ist durch die begrenzte Bewegbarkeit des Anschlagelements relativ zum Verbindungselement gewährleistet, dass das Anschlagelement am Verbindungselement verbleiben kann und es somit zu einer bevorzugten Montage führt, da das Anschlagelement und das Verbindungselement nicht voneinander getrennt werden.

Weitere vorteilhafte Ausführungsformen der Erfindung sind in den abhängigen Ansprüchen definiert.

Als vorteilhaft hat es sich herausgestellt, wenn das wenigstens eine Anschlagelement radial vom Verbindungselement absteht.

Als besonders vorteilhaft hat es sich dabei herausgestellt, wenn das Verbindungselement eine Längsachse aufweist und das wenigstens eine Anschlagelement entlang der Längsachse des Verbindungselements begrenzt bewegbar ist.

Besonders bevorzugt ist dabei vorgesehen, dass das wenigstens eine Anschlagelement am Verbindungselement lösbar befestigbar ist.

Als besonders vorteilhaft hat es sich herausgestellt, wenn das Verbindungselement und der Befestigungskörper gemeinsam als eine vormontierte Baueinheit ausgebildet sind. Dadurch kann erzielt werden, dass sich das Verbindungselement nicht selbsttätig von dem Befestigungskörper trennen kann und somit kann gewährleistet werden, dass das Verbindungselement nicht verloren geht.

Gemäß einem bevorzugten Ausführungsbeispiel kann vorgesehen sein, dass sich das Verbindungselement im Wesentlichen vollständig durch die Durchgangsöffnung des Befestigungskörpers hin erstreckt.

Weiters kann bevorzugt vorgesehen sein, dass das Verbindungselement im Montagezustand einerseits versenkt in der Durchgangsöffnung der Befestigungsvorrichtung und andererseits im Möbel aufgenommen ist. Somit kann eine ästhetisch ansprechende Befestigungsvorrichtung im Montagezustand erzielt werden, da dadurch, dass das Verbindungselement in der Befestigungsvorrichtung versenkt ist, dieses Verbindungselement nicht über die Befestigungsvorrichtung seitlich hinaus ragt.

Gemäß einem bevorzugten Ausführungsbeispiel kann vorgesehen sein, dass die Verbindungselementbereiche kraftschlüssig und/oder formschlüssig mit dem Möbel verbindbar sind.

Als vorteilhaft hat es sich weiters herausgestellt, wenn die beiden Verbindungselementbereiche zueinander symmetrisch am Verbindungselement ausgebildet sind.

Weiters hat es sich als vorteilhaft erwiesen, wenn ein Verbindungselementbereich in Montagestellung die linke oder die rechte Möbelbeschlagseite überragt. Durch das Überragen des Verbindungselementbereichs über die Möbelbeschlagsseiten hinaus kann das Verbindungselement in einen Möbelkorpus eindringen und in diesem befestigt werden.

Bevorzugt kann weiters vorgesehen sein, dass die Verbindungselementbereiche des Verbindungselements ein Gewinde aufweisen. Durch die Verwendung eines Gewindes kann auf einfach Art und Weise eine Befestigung erfolgen.

Besonders bevorzugt ist dabei vorgesehen, dass das wenigstens eine Anschlagelement im Gewinde bewegbar gelagert ist.

Als vorteilhaft hat sich dabei herausgestellt, wenn das wenigstens eine Anschlagelement als Sprengring ausgebildet ist.

Erfinsungsgemäß ist es vorgesehen, dass das Verbindungselement zwei verbindungselementfeste Anschläge für das wenigstens eine Anschlagelement aufweist.

Dabei ist bevorzugt vorgesehen, dass das wenigstens eine Anschlagelement jeweils zwischen einem der verbindungselementfesten Anschläge einerseits und der als Anschlag dienenden Möbelbeschlagsseite andererseits begrenzt bewegbar ist.

Besonders bevorzugt ist jedoch, dass die Befestigungsvorrichtung zwei Anschlagelemente aufweist.

Erfindungsgemäß ist es weiters vorgesehen, dass das Verbindungselement zwei Enden aufweist, wobei im Bereich der beiden Enden des Verbindungselements verbindungselementfeste Anschläge für die das wenigstens eine Anschlagelement vorgesehen ist.

Gemäß einem bevorzugten Ausführungsbeispiel kann vorgesehen sein, dass am Verbindungselement zwei gesonderte Werkzeugaufnahmen ausgebildet sind. Durch die Ausbildung von zwei eigenständigen Werkzeugaufnahmen kann jede einzeln für die Montage an einer Möbelbeschlagsseite Verwendung finden.

Günstigerweise sind die Werkzeugaufnahmen als Schlitz oder Kreuzschlitz oder Innensechskant oder Innensechsrund ausgebildet.

In einer Ausführungsform der Erfindung ist der Befestigungskörper im Wesentlichen vollständig im Möbelbeschlag ausgebildet. Durch die Ausbildung des Befestigungskörpers im Möbelbeschlag kann dieser Möbelbeschlag als komplette Baugruppe vorgefertigt werden und es ist kein zusätzlicher Zusammenbau bei der Montage des Möbelbeschlags am Möbel notwendig.

Erfindungsgemäß ist es vorgesehen, dass der Möbelbeschlag als Ausstoßvorrichtung, Antriebsvorrichtung, Einzugsvorrichtung oder Dämpfungsvorrichtung für ein bewegliches Möbelteil oder als Stellantrieb für eine Möbelklappe oder als Schienenausziehführung oder als Beleuchtungsvorrichtung ausgebildet ist.

Weitere Einzelheiten und Vorteile der Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine perspektivische Darstellung eines Möbels mit einer Möbelklappe,
- Fig. 2: eine perspektivische Darstellung eines Möbels mit entfernter Möbelklappe,
- Fig. 3: eine perspektivische Darstellung einer Seitenwand eines Möbelkorpus von einem Möbel mit darauf montiertem Möbelbeschlag,
- Fig. 4: eine perspektivische Darstellung eines Möbelbeschlags mit vier Befestigungsvorrichtungen bevor deren Verbindungselemente im Befestigungskörper eingesetzt wurden,
- Fig. 5: eine perspektivische Darstellung der Figur 4 mit montierten Verbindungselementen,
- Fig. 6: eine Detailansicht der Figur 5,
- Fig. 7: eine perspektivische Darstellung mit einem Schnitt bei einer Befestigungsvorrichtung des Möbelbeschlags,
- Fig. 8: eine Detaildarstellung der Figur 7,
- Fig. 9: eine Schnittdarstellung eines Möbelbeschlags mit einer Befestigungsvorrichtung vor der Montage an einer Möbelseitenwand,
- Fig. 10: eine Schnittdarstellung der Figur 9 nach erfolgter Montage an einer rechten Seitenwand,
- Fig. 11: eine Schnittdarstellung durch eine Befestigungsvorrichtung eines Möbelbeschlags nach erfolgter Montage an einer linken Seitenwand,
- Fig. 12: eine perspektivische Darstellung eines Verbindungselementes mit zwei gelösten Anschlagelementen,
- Fig. 13: eine perspektivische Darstellung des Verbindungselementes mit montierten Anschlagelementen,
- Fig. 14: eine perspektivische Darstellung eines Verbindungselementes mit einem begrenzt bewegten Anschlagelement,
- Fig. 15 und 16: eine Variante eines Verbindungselementes mit zwei Anschlagelementen in Perspektive und in Draufsicht,
- Fig. 17 und 18: eine weitere Variante eines Verbindungselementes mit zwei Anschlagelementen in Perspektive und in Draufsicht,
- Fig. 19: ein Schnitt durch einen Möbelbeschlag und dessen Befestigungsvorrichtung mit einer Positioniervorrichtung für das Verbindungselement,
- Fig. 20: eine Variante einer Positioniervorrichtung für ein Verbindungselement in Schnittdarstellung in einem Möbelbeschlag,
- Fig. 21: eine Variante einer Befestigungsvorrichtung mit nur einem Anschlagelement in Explosionsdarstellung,
- Fig. 22: eine Schnittdarstellung durch die Befestigungsvorrichtung der Figur 21 in perspektivischer Ansicht,
- Fig. 23: eine Schnittdarstellung wie in Figur 22 mit einem nach links versetzten Verbindungselement,
- Fig. 24: eine Schnittdarstellung durch eine Befestigungsvorrichtung eines Möbelbeschlags vor der Montage an einer Möbelkorpusseitenwand,
- Fig. 25: eine Schnittdarstellung einer Befestigungsvorrichtung eines Möbelbeschlags nach erfolgter Montage an einer Möbelkorpusseitenwand.

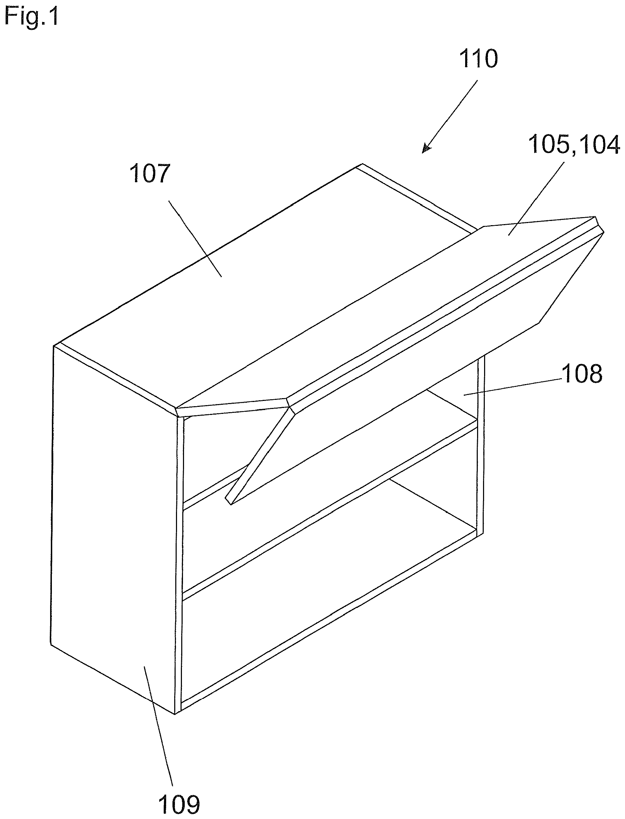

Figur 1 zeigt eine perspektivische Darstellung eines Möbels 110. Dieses Möbel 110 weist einen Möbelkorpus 107 und ein bewegliches Möbelteil 104 - welches als Möbelklappe 105 ausgebildet ist - auf. Der Möbelkorpus 107 weist weiters eine rechte Möbelkorpusseite 108 und eine linke Möbelkorpusseite 109 auf.

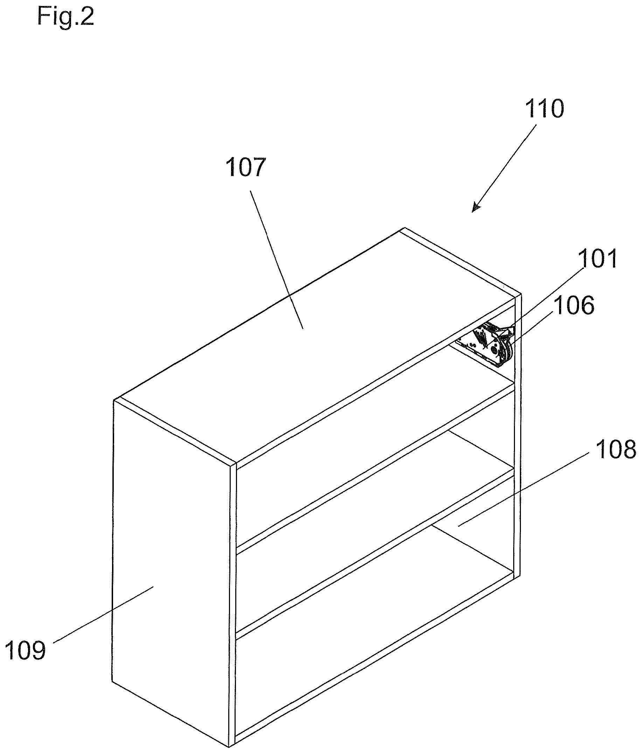

An diesen Möbelkorpusseiten 108 und 109 wird - wie dies in der Figur 2 dargestellt ist - der Möbelbeschlag 101 mittels einer hier nicht dargestellten Befestigungsvorrichtung 100 befestigt. Der Möbelbeschlag 101 ist in diesem Ausführungsbeispiel als ein Stellantrieb 106 für die hier nicht dargestellte Möbelklappe 105 ausgeführt (siehe dazu Figur 1).

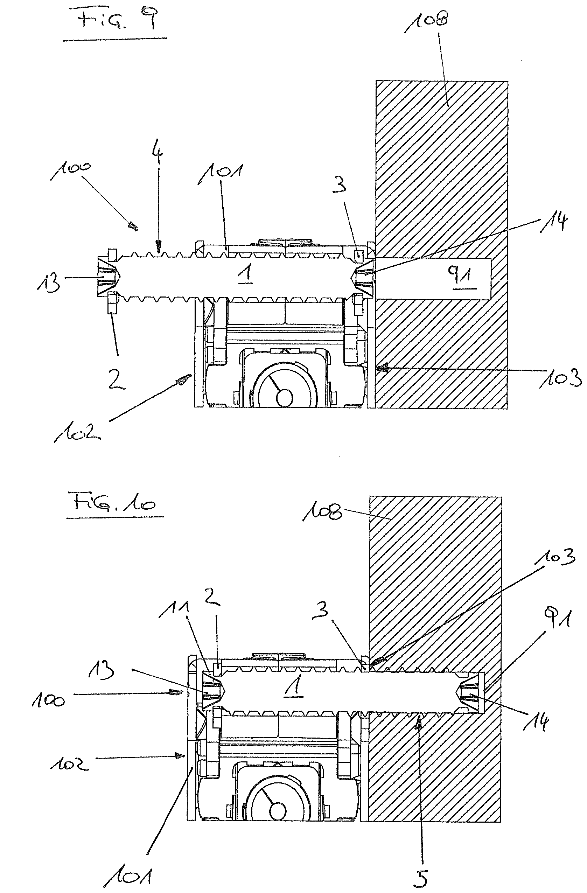

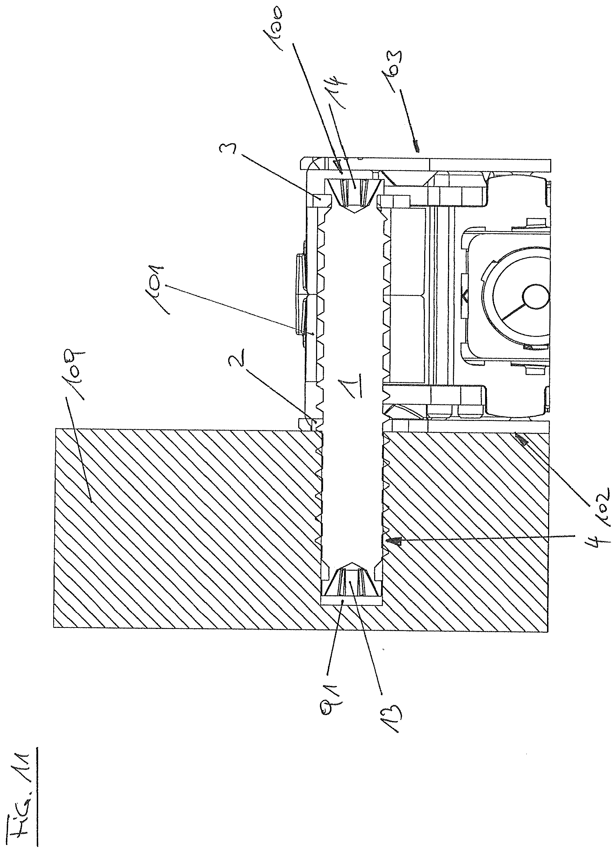

Ein weiterer Möbelbeschlag 101 ist auf der gegenüberliegenden linken Möbelkorpusseite 109 befestigt (in dieser Darstellung nicht ersichtlich). Um für eine Anbringung an der linken bzw. einer rechten Möbelkorpusseite 108 und 109 nicht zwei unterschiedliche Ausführungen für Möbelbeschläge 101 herstellen zu müssen, sind diese Möbelbeschläge 101 symmetrisch ausgebildet, das heißt, dass man ein und denselben Möbelbeschlag 101 sowohl auf der linken Möbelkorpusseite 109 als auch auf der rechten Möbelkorpusseite 108 befestigen kann. In dieser und auch in den folgenden Figuren wird jeweils von einem Möbelbeschlag 101 die Rede sein, welcher an einer linken 109 oder rechten Möbelkorpusseitenwand 108 eines Möbels 110 befestigt wird. Es versteht sich von selbst, dass natürlich auch Möbelbeschläge 101 angedacht sein können, die nicht auf der linken 109 oder rechten Möbelkorpusseitenwand 108 befestigt werden, sondern an einer anderen Seite des Möbels 110 - wie etwa dem Boden oder der Decke des Möbelkorpus 107 oder auf einem der im Möbelkorpus 107 angeordneten Fachböden, oder auch auf einem beweglichen Möbelteil (wie einer Möbelklappe) einer Schublade oder Ähnlichem. Wichtig dabei ist ausschließlich, dass es sich bei dem Möbelbeschlag 101 um eine symmetrisch ausgebildete Baugruppe handelt, die es ermöglicht, den Möbelbeschlag 101 selbst an zwei unterschiedlichen Möbelbeschlagsseiten (wie etwa einer linken Möbelbeschlagseite 102 und einer rechten Möbelbeschlagseite 103) an einer Seite des Möbels 110 anzuordnen (siehe Figuren 10 und 11).

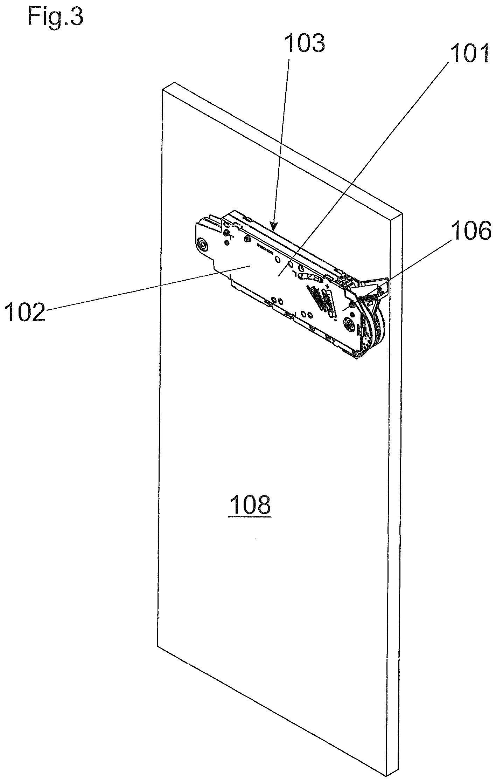

Figur 3 zeigt die rechte Möbelkorpusseite 108, an der im oberen Bereich der Möbelbeschlag 101 mit seiner rechten Möbelbeschlagseite 103 an der rechten Möbelkorpusseite 108 befestigt wurde. Dieser Möbelbeschlag 101 ist in diesem bevorzugten Ausführungsbeispiel als Stellantrieb 106 für eine hier nicht dargestellte Möbelklappe 105 ausgebildet.

Der Möbelbeschlag 101 hätte ebenso gut als Ausstoßvorrichtung, als Antriebsvorrichtung, als Einzugsvorrichtung oder zum Beispiel als Dämpfungsvorrichtung für ein bewegliches Möbelteil oder auch als Schienenausziehführung oder als Beleuchtungsvorrichtung ausgebildet sein können.

Dieser Möbelbeschlag 101 hätte ebenso mit seiner linken Möbelbeschlagseite 102 auf einer hier nicht dargestellten linken Möbelkorpusseite 109 befestigt werden können - dank der symmetrischen Ausführung des Möbelbeschlags 101.

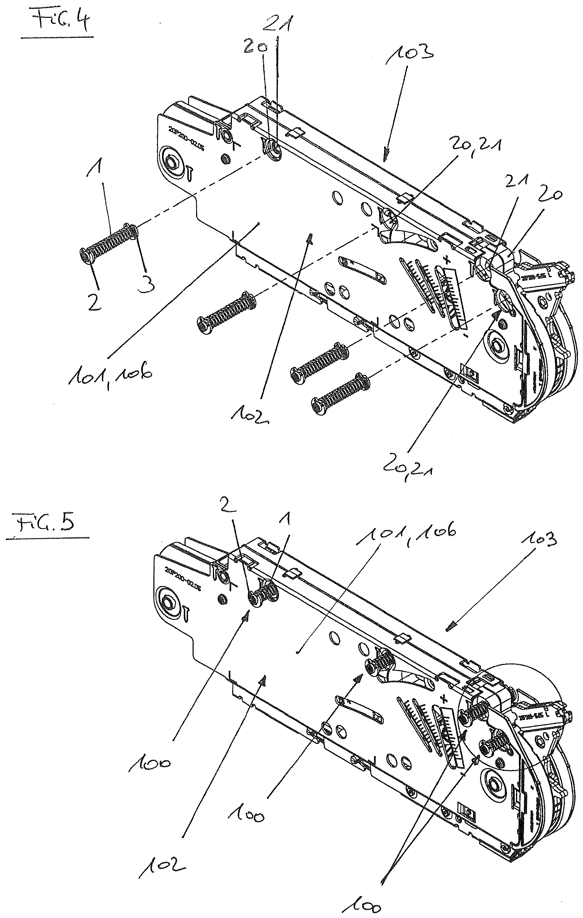

Figur 4 und Figur 5 zeigen eine perspektivische Darstellung eines Möbelbeschlags 101 mit vier Befestigungsvorrichtungen 100, wobei in der Figur 4 die Verbindungselemente 1 mit deren Anschlagelementen 2 und 3 noch nicht in den Möbelbeschlag 101 eingesetzt worden sind. Dies stellt somit den Zustand vor der Auslieferung des Möbelbeschlags 101 dar, da es vorgesehen ist, diese Baugruppe in einem Stück auszuliefern, um zu vermeiden, dass ein Verbindungselement 1 oder dessen Anschlagelemente 2 und 3 vor der Montage verloren gehen könnten. Dies stellt auch den großen Vorteil gegenüber der Verwendung von einfachen Schrauben dar, welche bisher ebenfalls gerne verwendet worden sind, um solche Möbelbeschläge an Möbeln zu befestigen.

Der Möbelbeschlag 101 ist in diesem bevorzugten Ausführungsbeispiel als Stellantrieb 106 ausgebildet und weist vier Befestigungsvorrichtungen 100 auf. Die Befestigungsvorrichtungen 100 bestehen im Wesentlichen aus einem Befestigungskörper 20, der im Inneren des Möbelbeschlags 101 ausgebildet ist und der eine Durchgangsöffnung 21 durch den Möbelbeschlag 101 aufweist, welcher sich von einer linken Möbelbeschlagseite 102 bis zur rechten Möbelbeschlagseite 103 erstreckt.

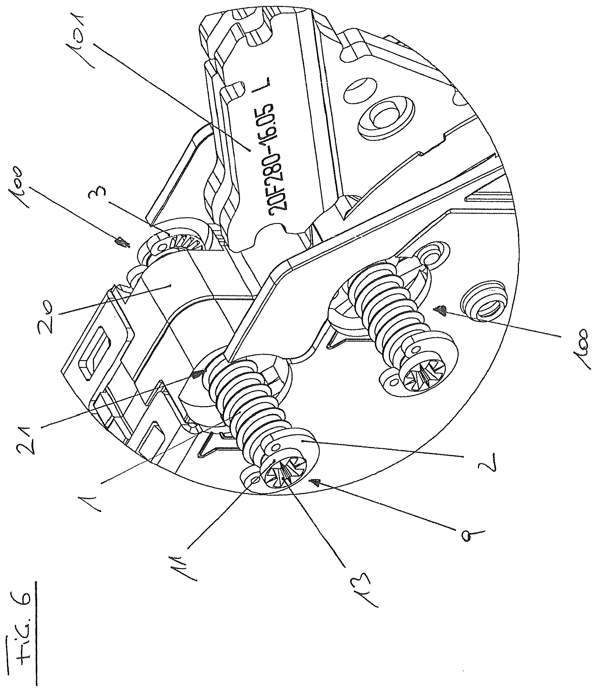

In der Figur 6 ist eine Detailansicht der Figur 5 dargestellt, bei der die beiden vorderen Befestigungsvorrichtungen 100 im eingebauten Zustand dargestellt sind. Damit das Verbindungselement 1 nicht aus dem Möbelbeschlag 101 fallen kann, sind an beiden Enden 9 und 10 des Verbindungselements 1 die beiden Anschlagelemente 2 und 3 montiert. In diesem bevorzugten Ausführungsbeispiel handelt es sich dabei um Sprengringe. Diese Sprengringe sind im Gewinde des Verbindungselements 1 begrenzt beweglich. Das heißt, sie können entlang des Gewindes wandern. Damit sich die Anschlagelemente 2 und 3 nicht selbsttätig von dem Verbindungselement 1 lösen können, sind am Verbindungselement 1 im Bereich der Enden 9 und 10 die verbindungselementfesten Anschläge 11 und 12 ausgebildet, an denen die Anschlagelemente 2 und 3 anstehen können. Die verbindungselementfesten Anschläge weisen vorzugsweise Anschlagflächen auf, die im Wesentlichen senkrecht auf die Längsachse des Verbindungselementes ausgerichtet sind. Dabei ergibt sich in axialer Richtung ein formschlussartiger Anschlag bzw. Halt. Sobald eines der Anschlagelemente 2 oder 3 an dem verbindungselementfesten Anschlag 11 bzw. 12 ansteht, wirken diese zusammen wie ein Verbindungselementkopf mit dem der Möbelbeschlag 101 an einem hier nicht dargestellten Möbel befestigt, das heißt in diesem Fall verspannt, werden kann. In diesem Ausführungsbeispiel wird dabei ein geeignetes Werkzeug in die Werkzeugaufnahme 13 eingeführt und damit das Verbindungselement 1 zusammen mit dem Anschlagelement 2 bzw. 3 verdreht.

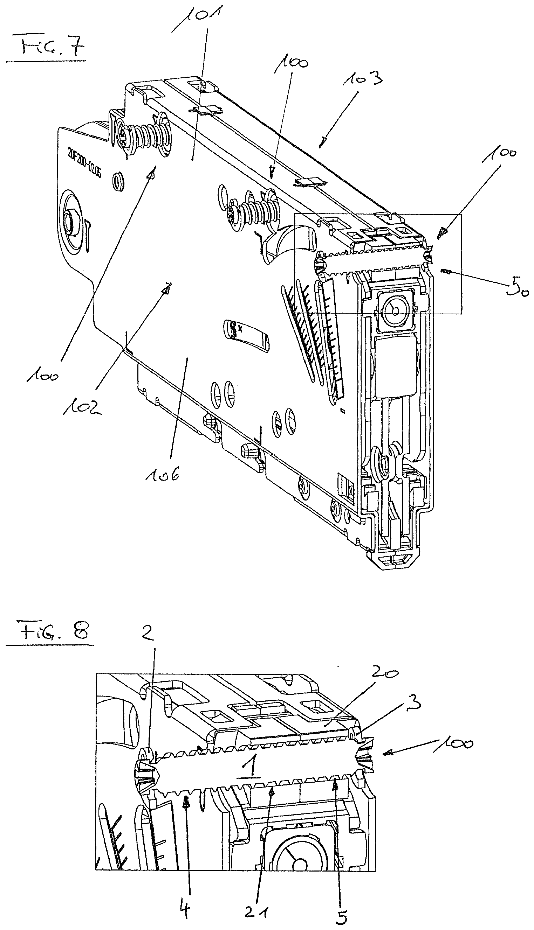

In den Figuren 7 und 8 ist wiederum der gleiche Möbelbeschlag 101 der vorangegangenen Figuren dargestellt, diesmal mit einer Schnittdarstellung bei einer der Befestigungsvorrichtungen 100. In der Detaildarstellung der Figur 8 ist gut erkennbar, dass einerseits der Befestigungskörper 20 des Möbelbeschlags 101 sich im Wesentlichen vollständig innerhalb des Möbelbeschlags 101 befindet und dass sich das Verbindungselement 1 im Wesentlichen vollständig durch die Durchgangsöffnung 21 des Befestigungskörpers 20 erstreckt. Die Befestigungsvorrichtung 100 ist dabei als eine vormontierte Baueinheit 50 ausgebildet, wodurch keines der Teile der Befestigungsvorrichtung 100 - wie etwa das Verbindungselement 1 oder die Anschlagelemente 2 und 3 - während etwa des Transports von dem Möbelbeschlag 101 getrennt werden kann und somit ein Verlust eines dieser Teile vermieden werden kann.

Speziell in dieser Darstellung der Figuren 7 und 8 ist gut erkennbar, dass mit der Befestigungsvorrichtung 100 der Möbelbeschlag 101 wahlweise mit einer linken Möbelbeschlagseite 102 oder einer rechten Möbelbeschlagseite 103 an einem hier nicht dargestellten Möbel 110 befestigbar ist, wobei die Befestigungsvorrichtung 101 ein Verbindungselement 1 aufweist, wobei das Verbindungselement 1 zwei Verbindungselementbereiche 4 und 5 zum Befestigen des Möbelbeschlags 101 am Möbel 110 aufweist und die Befestigungsvorrichtung 100 einen Befestigungskörper 20 aufweist mit einer Durchgangsöffnung 21. Dabei ist das Verbindungselement 1 zumindest teilweise in der Durchgangsöffnung 21 angeordnet und das Verbindungselement 1 ist relativ zu dem Befestigungskörper 20 bewegbar, wobei das Verbindungselement 1 zwei Anschlagelemente 2 und 3 aufweist, die relativ zu dem Verbindungselement 1 begrenzt bewegbar sind.

In den Figuren 9 bis 11 ist nun dargestellt, wie der Möbelbeschlag 101 über dessen Befestigungsvorrichtung 100 einmal an einer rechten Möbelkorpusseite 108 befestigt werden kann (Figur 10) und einmal an einer linken Möbelkorpusseite 109 befestigt werden kann (Figur 11).

Dazu wird - wie in der Figur 9 dargestellt - der Möbelbeschlag 101 an die rechte Möbelkorpusseite 108 angesetzt, sodass sich das Verbindungselement 1 über der Bohrung 91 der rechten Möbelkorpusseite 108 befindet. Anschließend wird ein geeignetes Werkzeug in die Werkzeugaufnahme 13 des Verbindungselement 1 eingesetzt und das Verbindungselement 1 wird in diesem bevorzugten Ausführungsbeispiel in die Bohrung 91 der rechten Möbelkorpusseite 108 eingeschraubt, bis der Verbindungselementbereich 5 des Verbindungselement 1 in der Bohrung 91 der rechten Möbelkorpusseite 108 sich befindet (Figur 10). Damit eine stabile Verbindung zwischen dem Möbelbeschlag 101 und der Möbelkorpusseite 108 hergestellt wird, wirkt das Anschlagelement 2 zusammen mit dem verbindungselementfesten Anschlag 11 des Verbindungselement 1 wie ein Schraubenkopf, der den Möbelbeschlag 101 gegen die rechte Möbelkorpusseite 108 drückt. Das zweite Anschlagelement 3 ist während des Einschraubens des Verbindungselement 1 in die rechte Möbelkorpusseite 8 entlang des Verbindungselementes 1 in Richtung dessen Mitte gewandert und liegt an der rechten Möbelkorpusseite 108 an.

In dieser Darstellung ist gut erkennbar, dass das Verbindungselement 1 im Montagezustand einerseits versenkt in der Durchgangsöffnung 21 des Befestigungskörpers 20 und andererseits im Möbelbeschlag 101 aufgenommen ist. Weiters ist in diesen Darstellungen der Figuren 10 und 11 erkennbar, dass jeweils ein Verbindungselementbereich 4 bzw. 5 in Montagestellung die linke Möbelbeschlagsseite 102 bzw. die rechte Möbelbeschlagsseite 103 des Möbelbeschlags 101 überragt.

Damit auch eine Montage auf der linken Möbelkorpusseite 109 erfolgen kann, weist das Verbindungselement 1 zwei gesonderte Werkzeugaufnahmen 13 und 14 auf. Einmal für die Montage an der rechten Möbelkorpusseite 108 (Werkzeugaufnahme 13) und einmal auf der linken Möbelkorpusseite 109 (Werkzeugaufnahme 14).

Nach erfolgter Montage verschwindet das Verbindungselement 1 zusammen mit den Anschlagelementen 2 bzw. 3 vollständig in dem Möbelbeschlag 101, was zu einer ästhetischen und schmalen Bauform des Möbelbeschlags 101 beiträgt.

Die Befestigung des Möbelbeschlags 101 an der linken Möbelkorpusseite 109 erfolgt analog wie dies bei der Beschreibung der Figur 10 beschrieben wurde.

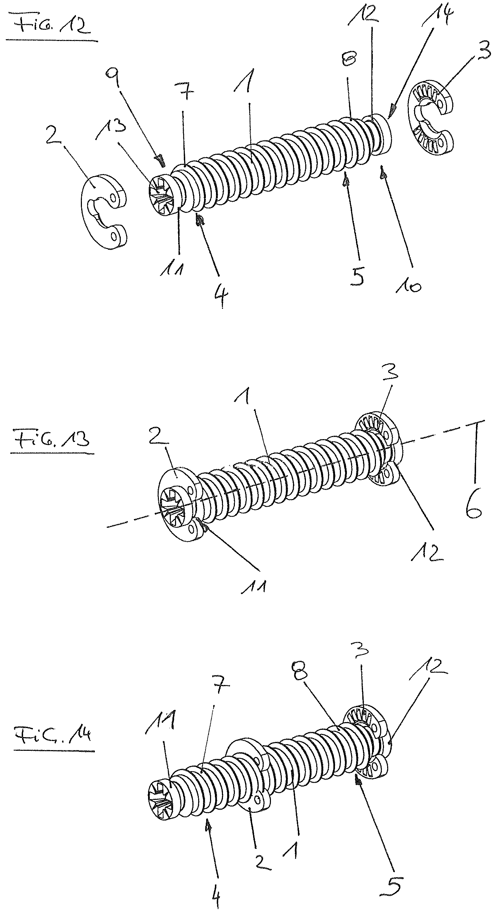

Figur 12 zeigt eine Explosionsdarstellung des Verbindungselementes 1 und dessen beiden Anschlagelementen 2 und 3, welche - wie hier gut erkennbar ist - als Sprengringe ausgebildet sind.

Das Verbindungselement 1 weist dabei die beiden Enden 9 und 10 auf, in deren Bereich verbindungselementfeste Anschläge 11 und 12 ausgebildet sind, mit denen die beiden Anschlagelemente 2 und 3 daran gehindert werden, sich vom Verbindungselement 1 lösen zu können. Befinden sich die Anschlagelemente 2 und 3 an diesen verbindungselementfesten Anschlägen 11 und 12, so wirken die Anschlagelemente 2 und 3 zusammen mit den verbindungselementfesten Anschlägen 11 und 12 wie ein Verbindungselementkopf (siehe Figur 13).

Die Werkzeugaufnahmen 13 bzw. 14 sind in diesem bevorzugten Ausführungsbeispiel als Kreuzschlitzaufnahmen ausgebildet. Dies müsste natürlich nicht so sein. Ebenso gut wäre vorstellbar, dass die Werkzeugaufnahmen 13 bzw. 14 als Schlitz, als Innensechskant oder als Innensechsrund oder auch jede andere erdenkbare Werkzeugaufnahme ausgebildet sind.

Wie aus der Figur 14 erkennbar ist, sind die Anschlagelemente 2 und 3 im Gewinde 7 bzw. 8 bewegbar gelagert und können sich in diesen Gewinden 7 bzw. 8 begrenzt bewegen, bis sie an den verbindungselementfesten Anschlägen 11 bzw. 12 anstehen.

Bei diesem Ausführungsbeispiel handelt es sich bei den Gewinden 7 und 8 um ein durchgehendes Gewinde. Dies müsste nicht so sein, da ein Gewinde 7 bzw. 8 an sich nur an den Verbindungselementbereichen 4 und 5 notwendig ist, um den Möbelbeschlag 101 (nicht dargestellt) am Möbel zu befestigen. In diesem Ausführungsbeispiel sind die beiden Verbindungselementbereiche 4 und 5 zueinander symmetrisch am Verbindungselement 1 ausgebildet und die Anschlagelemente 2 und 3 sind lösbar mit dem Verbindungselement 1 befestigbar. Dies birgt fertigungstechnische Vorteile, müsste aber eigentlich nicht so sein.

Wie aus der Figur 13 bzw. 14 erkennbar ist, sind die beiden Anschlagelemente 2 und 3 entlang der Längsachse 6 des Verbindungselements 1 begrenzt bewegbar. Dabei stehen die beiden Anschlagelemente 2 und 3 radial vom Verbindungselement 1 ab.

In dem bisher beschriebenen Ausführungsbeispiel wies das Verbindungselement 1 immer ein Gewinde 7 bzw. 8 auf, um das Verbindungselement 1 in eine Möbelkorpusseite 108 bzw. 109 einzuschrauben. Dies müsste natürlich nicht so sein. So ist es im Möbelbau bereits bekannt, dass man derartige Verbindungselemente auch nicht einschraubt, sondern diese auch oftmals als Presspassung mit der Möbelkorpusseite verbunden werden.

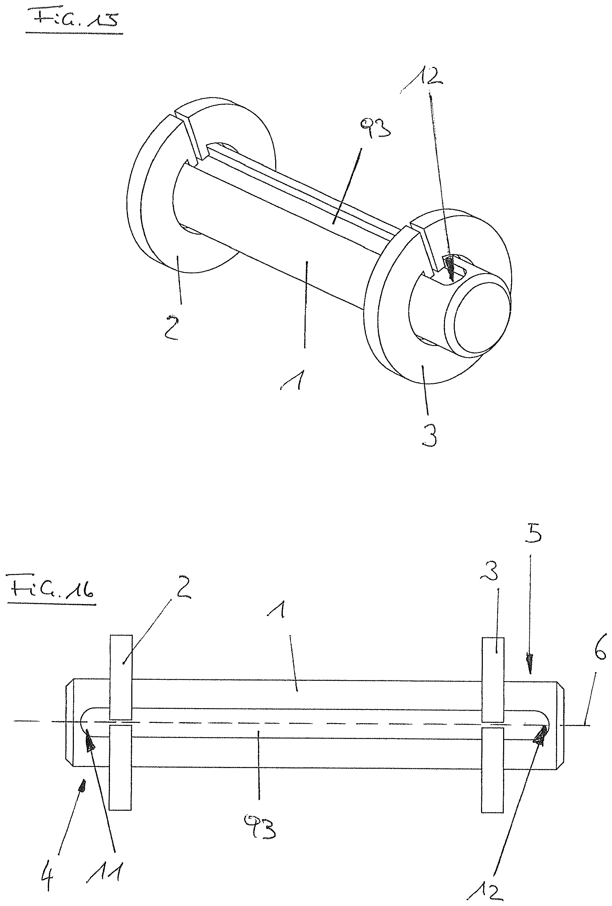

In diesem Falle können die Verbindungselemente 1 gewindefrei ausgebildet sein, wie dies in den beiden Ausführungsbeispielen der Figuren 15 bis 18 der Fall ist.

In den Figuren 15 und 16 ist das Verbindungselement 1 als Stift ausgebildet, welcher eine Nut 93 entlang seiner Längsachse 6 aufweist. In diese Nut 93 des Verbindungselements 1 ragt eine Nase des Anschlagelementes 2 bzw. 3. Entlang der Nut 93 kann das Verbindungselement 2 bzw. 3 gleiten bzw. verschoben werden, bis es am Ende der Nut 93 an deren Anschlägen 11 und 12 ansteht.

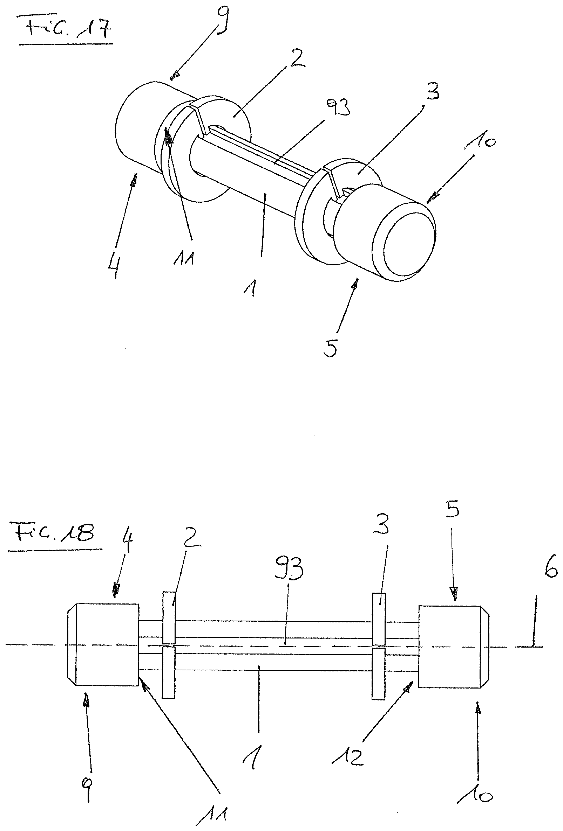

Ähnlich verhält es sich mit dem Ausführungsbeispiel der Figuren 17 und 18, bei dem die Enden 9 und 10 des Verbindungselementes 1 einen größeren Durchmesser aufweisen, als der Durchmesser des Verbindungselementes 1 in dessen mittleren Bereich. Zwischen den beiden Enden 9 und 10 mit einem größeren Durchmesser liegen wiederum die beiden Anschlagelemente 2 und 3 und können sich zwischen den verbindungselementfesten Anschlägen 11 und 12 im Bereich der Enden 9 und 10 des Verbindungselements 1 frei bewegen. Auch in diesem Ausführungsbeispiel ist eine Nut 93 ausgebildet. Diese Nut 93 ist jedoch nur optional, eine Ausführung ohne dieser Nut 93 ist ebenfalls vorstellbar.

Weder das Ausführungsbeispiel der Figuren 15 und 16, noch das Ausführungsbeispiel der Figuren 17 und 18 weist ein Gewinde auf, um das Verbindungselement 1 mit einer hier nicht dargestellten Möbelkorpusseite 108 bzw. 109 zu verbinden. Eine Verbindung mit der Möbelkorpusseite erfolgt bevorzugter Weise über eine Presspassung. Dazu ist es auch nicht notwendig, dass das Verbindungselement 1 eine Werkzeugaufnahme aufweist, da das Verbindungselement 1 mit einem Hammer oder ähnlich geeigneten Werkzeug in die Möbelkorpusseite eingeschlagen wird. Man könnte aber auch dieses Ausführungsbeispiel mit Gewinden und / oder Werkzeugaufnahmen versehen.

Die Verbindungselementbereiche 4 und 5 sind somit bei allen Ausführungsbeispielen kraftschlüssig und/oder formschlüssig mit dem hier nicht dargestellten Möbel 110 verbindbar.

Ansonsten gilt bei den beiden Ausführungsbeispielen der Figuren 15 bis 18 sinngemäß das bei den Ausbildungsbeispielen der Figuren 4 bis 14 Erwähnte.

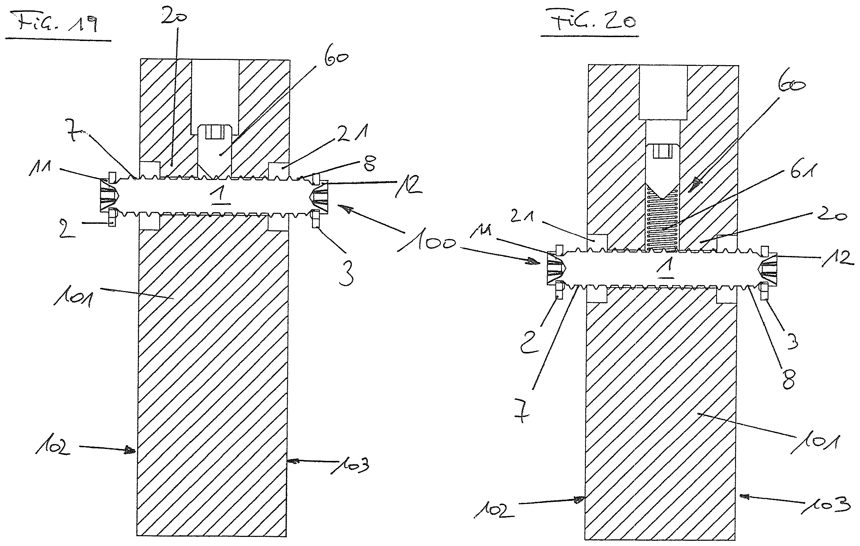

Damit das Verbindungselement 1 zusammen mit den Anschlagelementen 2 und 3 nicht lose in der Durchgangsöffnung 21 des Befestigungskörpers 20 liegt, ist eine Positioniervorrichtung 60 vorgesehen, wie dies in den Ausführungsbeispielen der Figuren 19 und 20 dargestellt ist.

Beim Ausführungsbeispiel der Figur 19 greift die Positioniervorrichtung 60 in das Gewinde 7 bzw. 8 des Verbindungselementes 1 ein und verhindert somit, dass das Verbindungselement 1 in der Durchgangsöffnung 21 sich selbsttätig bewegen kann.

In der Figur 20 ist ein weiteres Ausführungsbeispiel dargestellt, bei dem die Positioniervorrichtung 60 eine Federvorrichtung 61 aufweist, die eine radiale Kraft auf das Verbindungselement 1 ausübt und somit ebenfalls ein Bewegen des Verbindungselement 1 in der Durchgangsöffnung 21 hemmt.

Im Ausführungsbeispiel der Figur 20 weist das Verbindungselement 1 ebenfalls wiederum ein Gewinde 7 bzw. 8 auf. Dies wäre für diese Ausführungsform der Positioniervorrichtung 60 nicht notwendig, da die Federvorrichtung 61 der Positioniervorrichtung 60 ebenfalls auf einen glatten Schaft eines Verbindungselements 1 drücken würde und somit dessen Bewegung hemmen würde.

Aus den Figuren 19 und 20 ist weiters ersichtlich, dass die beiden Anschlagelemente 2, 3 der Befestigungsvorrichtung 100 jeweils zwischen einem der verbindungselementfesten Anschläge 11, 12 einerseits und der als Anschlag dienenden Möbelbeschlagsseite 102, 103 andererseits begrenzt bewegbar sind.

In den Ausführungsbeispielen der Figuren 4 bis 20 kommen jeweils zwei Anschlagelemente 2 und 3 zum Einsatz, um einen Möbelbeschlag 101 über dessen Befestigungsvorrichtung 100 an unterschiedlichen Möbelwänden zu befestigen.

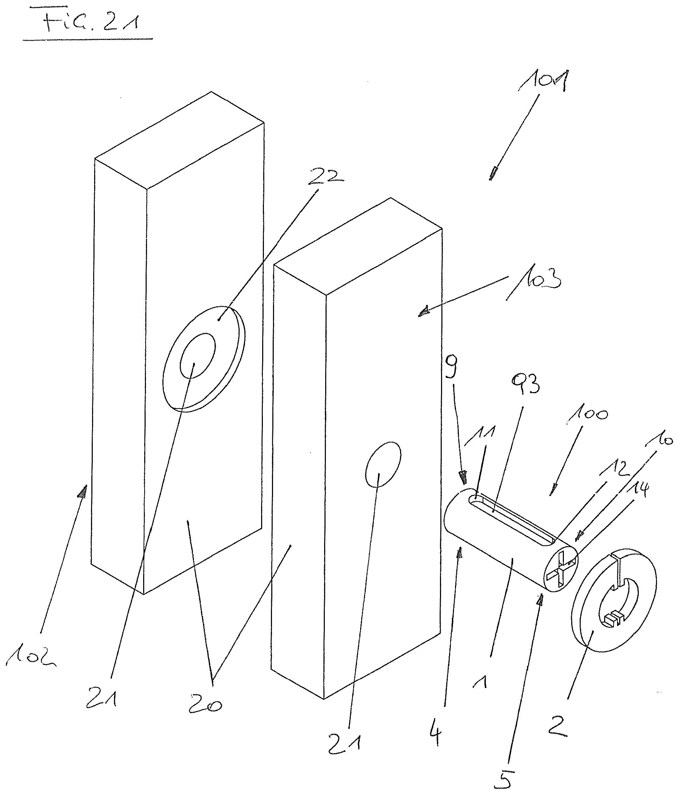

Im Ausführungsbeispiel der Figuren 21 bis 25 kommt nun eine Befestigungsvorrichtung 100 zum Einsatz, die nur ein einziges Anschlagelement 2 aufweist, das relativ zu dem Verbindungselement 1 begrenzt bewegbar ist und über das der Möbelbeschlag 101 an unterschiedlichen Möbelkorpusseitenwänden befestigt werden kann.

Figur 21 zeigt eine Explosionsdarstellung einer Befestigungsvorrichtung 100 eines Möbelbeschlags 101. Dabei weist die Befestigungsvorrichtung 100 im Unterschied zu den vorangegangenen Ausführungsbeispielen nur ein einziges Anschlagelement 2 auf, wobei das Anschlagelement 2 am Verbindungselement 1 lösbar befestigbar ist.

Die Verbindungselementbereiche 4 und 5 des Verbindungselements 1 sind wiederum kraft- und/oder formschlüssig mit dem hier nicht dargestellten Möbel verbindbar. Auch in diesem Ausführungsbeispiel sind die beiden Verbindungselementbereiche 4 und 5 zueinander symmetrisch am Verbindungselement 1 ausgebildet.

In diesem Ausführungsbeispiel sind die Verbindungselementbereiche 4 und 5 gewindelos ausgebildet. Es könnte jedoch ebenfalls der Fall sein, dass die Verbindungselementbereiche 4 und 5 ein Gewinde aufweisen, mit dem das Verbindungselement 1 in ein Möbel eingeschraubt wird.

In dieser Darstellung ist gut erkennbar, dass das Anschlagelement 2 hier wiederum als Sprengring ausgebildet ist. Das Verbindungselement 1 weist die beiden verbindungselementfesten Anschläge 11 und 12 für das Anschlagelement 2 auf.

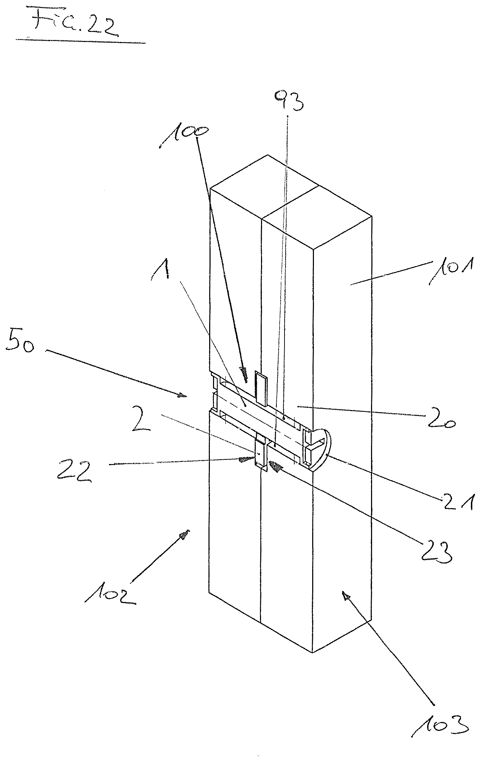

Zwischen diesen beiden verbindungselementfesten Anschlägen 11 und 12 ist das Anschlagelement 2 begrenzt bewegbar und dieses Anschlagelement 2 ist ebenfalls zwischen den als Anschlag dienenden Möbelbeschlagseiten 102 und 103 begrenzt bewegbar. Dazu ist im Inneren des Möbelbeschlags 101 ein Hohlraum ausgebildet, der das Anschlagelement 2 in montierter Stellung in sich aufnimmt (siehe dazu Figuren 22 bis 25).

Die verbindungselementfesten Anschläge 11 und 12 sind im Bereich der beiden Enden 9 und 10 des Verbindungselements 1 ausgebildet, an diesen verbindungselementfesten Anschlägen 11 und 12 kann das Anschlagelement 2 bei der Montage anschlagen.

In diesem Ausführungsbeispiel weist das Verbindungselement 1 zwei gesonderte Werkzeugaufnahmen 13 und 14 auf, wobei diese Werkzeugaufnahmen 13 und 14 in diesem Ausführungsbeispiel als Kreuzschlitz ausgebildet sind. Dies ist besonders dann vorteilhaft, wenn das Verbindungselement 1 ein Gewinde aufweist, um das Verbindungselement 1 mit einer Möbelkorpuswand zu verbinden. Ebenfalls kann - wie in diesem Ausführungsbeispiel - das Verbindungselement 1 kein Gewinde aufweisen und mittels Presspassung mit einer Möbelkorpusseitenwand verbunden werden.

Figur 22 zeigt einen Schnitt durch einen Möbelbeschlag 101 und dessen Befestigungsvorrichtung 100 in der Perspektive.

Die Befestigungsvorrichtung 100 ist in dieser Position vollkommen im Möbelbeschlag 101 aufgenommen und ragt nicht über die Seitenwände 103 bzw. 102 des Möbelbeschlags hinaus. Im Inneren des Möbelbeschlags 101 ist ein Hohlraum ausgebildet, in dem sich das Anschlagselement 2 befindet.

Bei einer Montage des Möbelbeschlags 101 auf einer linken Seite schlägt das Anschlagelement 2 am linken Möbelbeschlagsinnenanschlag 22 an, bei einer Montage an einer rechten Seite würde das Anschlagelement 2 am rechten Möbelbeschlagsinnenanschlag 23 anschlagen.

In dieser Darstellung ist gut erkennbar, dass das Verbindungselement 1 und der Befestigungskörper 20 gemeinsam als eine vormontierte Baueinheit 50 ausgebildet sind. Weiters ist gut erkennbar, dass sich das Verbindungselement 1 im Wesentlichen vollständig durch die Durchgangsöffnung 21 des Befestigungskörpers 20 hin erstreckt. Dabei ist das Anschlagelement 2 in den beiden Nuten 93 bewegbar gelagert. Ebenso wäre es natürlich möglich, dass keine Nut 93 ausgebildet wäre, sondern dass am Verbindungselement 1 ein Gewinde vorhanden wäre, an dem das Anschlagelement 2 wandern könnte.

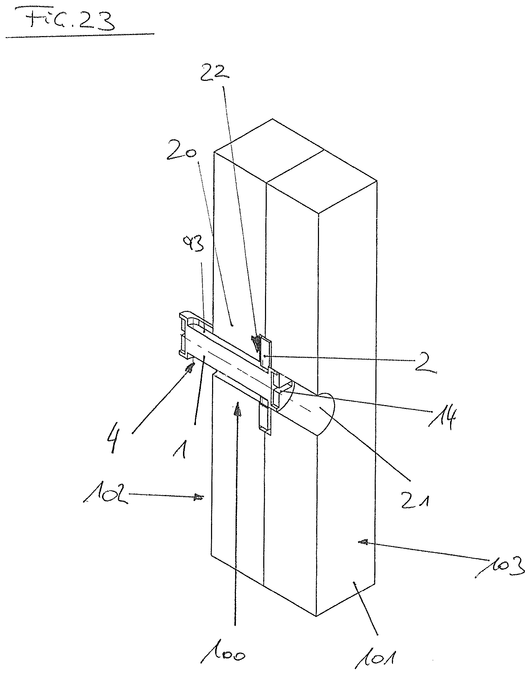

Figur 23 zeigt den Möbelbeschlag 101 der Figur 22 nach erfolgtem Verschieben des Verbindungselementes 1 in der Durchgangsöffnung 21 des Befestigungskörpers 20 des Möbelbeschlags 101. Dabei hat sich das Anschlagelement 2 relativ zum Verbindungselement 1 begrenzt bewegt, da das Anschlagelement 2 in dem Hohlraum des Möbelbeschlags 101 verharrte, während sich das Verbindungselement 1 aus der Durchgangsöffnung 21 teilweise hinausbewegt hat.

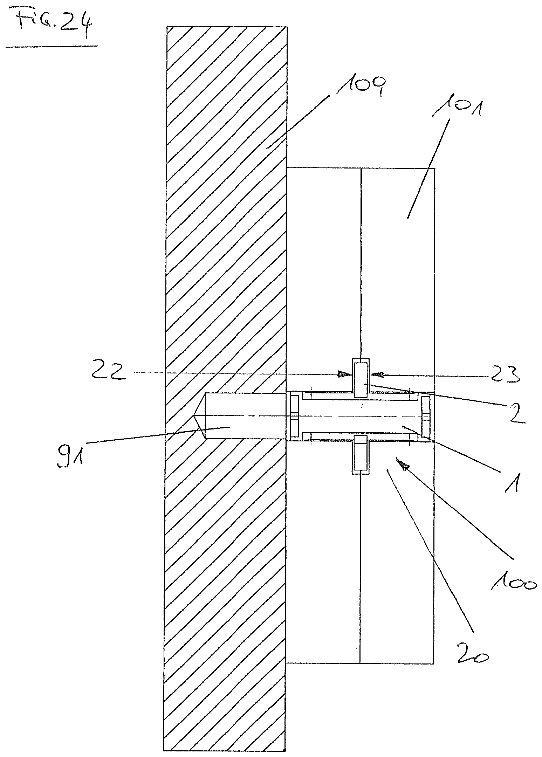

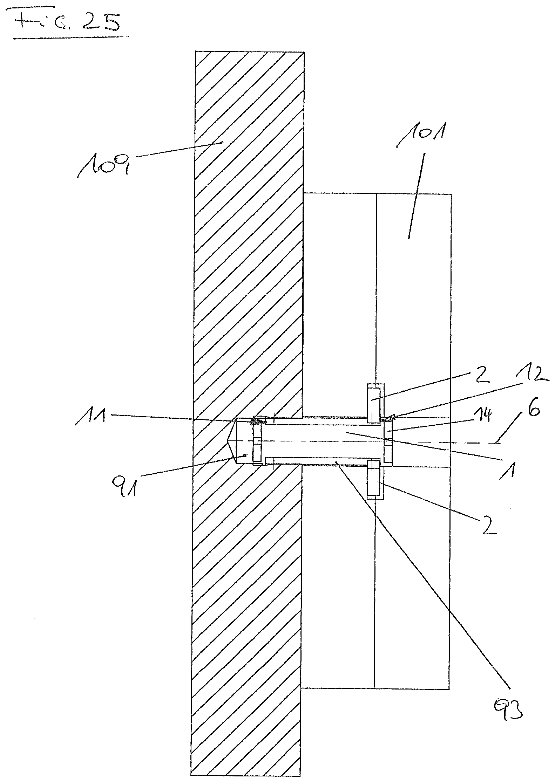

In Figur 24 ist in einer Schnittdarstellung dargestellt, wie der Möbelbeschlag 101 an der linken Möbelkorpusseitenwand 109 angeordnet wird, sodass sich das Verbindungselement 1 vor der Bohrung 91 der linken Möbelkorpusseitenwand 109 befindet. Anschließend wird, wie dies in der Figur 25 dargestellt ist, das Verbindungselement 1 in die Bohrung 91 der linken Möbelkorpusseitenwand 109 eingebracht, und zwar so weit, bis der verbindungselementfeste Anschlag 12 des Verbindungselements 1 auf das Anschlagelement 2 trifft, wodurch der Möbelbeschlag 101 an die linke Möbelkorpusseitenwand 109 gedrückt wird und somit dort befestigt ist.

In den Figuren 24 und 25 ist gut erkennbar, dass das Anschlagelement 2 radial vom Verbindungselement 1 absteht und dass das Verbindungselement 1 eine Längsachse 6 aufweist, wobei das Anschlagelement 2 entlang dieser Längsachse 6 des Verbindungselements 1 begrenzt bewegbar ist.

Nach erfolgter Montage des Möbelbeschlags 101 ist das Verbindungselement 1 einerseits versenkt in der Durchgangsöffnung 21 des Befestigungskörpers 20 und andererseits im Möbel 110 aufgenommen - in diesem Fall in der linken Möbelkorpusseitenwand 109.

## Patentansprüche

1. Möbelbeschlag (101) für ein Möbel (110) mit wenigstens einer Befestigungsvorrichtung (100) zum Befestigen des Möbelbeschlags (101) an dem Möbel (110), wobei mit der Befestigungsvorrichtung (100) der Möbelbeschlag (101) wahlweise mit einer linken Möbelbeschlagsseite (102) oder einer rechten Möbelbeschlagsseite (103) am Möbel (110) befestigbar ist, der Möbelbeschlag (101) als Ausstoßvorrichtung, Antriebsvorrichtung, Einzugsvorrichtung oder Dämpfungsvorrichtung für ein bewegliches Möbelteil (104) oder als Stellantrieb (106) für eine Möbelklappe (105) oder als Schienenausziehführung oder als Beleuchtungsvorrichtung ausgebildet ist, und die wenigstens eine Befestigungsvorrichtung (100) aufweist:
- ein Verbindungselement (1), wobei das Verbindungselement (1) zwei Verbindungselementbereiche (4, 5) zum Befestigen des Möbelbeschlags (101) am Möbel (110) aufweist, und
- einen Befestigungskörper (20) mit einer Durchgangsöffnung (21), wobei das Verbindungselement (1) zumindest teilweise in der Durchgangsöffnung (21) angeordnet ist und das Verbindungselement (1) relativ zu dem Befestigungskörper (20) bewegbar ist,
wobei das Verbindungselement (1) wenigstens ein Anschlagelement (2, 3) aufweist das relativ zu dem Verbindungselement (1) begrenzt bewegbar ist, wobei das Verbindungselement (1) zwei Enden (9, 10) aufweist und im Bereich der beiden Enden (9, 10) des Verbindungselementes (1) zwei verbindungselementfeste Anschläge (11, 12) für das wenigstens eine Anschlagelement (2, 3) vorgesehen sind, **dadurch gekennzeichnet, dass** die verbindungselementfesten Anschläge (11, 12) Anschlagflächen aufweisen, die senkrecht auf die Längsachse des Verbindungselementes (1) ausgerichtet sind.

2. Möbelbeschlag (101) nach Anspruch 1, **dadurch gekennzeichnet, dass** das wenigstens eine Anschlagelement (2, 3) radial vom Verbindungselement (1) absteht.

3. Möbelbeschlag (101) nach Anspruch 1 oder 2, **dadurch gekennzeichnet, dass** das Verbindungselement (1) eine Längsachse (6) aufweist und das wenigstens eine Anschlagelement (2, 3) entlang der Längsachse (6) des Verbindungselements (1) begrenzt bewegbar ist.

4. Möbelbeschlag (101) nach einem der Ansprüche 1 bis 3, **dadurch gekennzeichnet, dass** das wenigstens eine Anschlagelement (2, 3) am Verbindungselement (1) lösbar befestigbar ist.

5. Möbelbeschlag (101) nach einem der Ansprüche 1 bis 4, **dadurch gekennzeichnet, dass** sich das Verbindungselement (1) im Wesentlichen vollständig durch die Durchgangsöffnung (21) des Befestigungskörpers (20) hin erstreckt.

6. Möbelbeschlag (101) nach einem der Ansprüche 1 bis 5, **dadurch gekennzeichnet, dass** das Verbindungselement (1) im Montagezustand einerseits versenkt in der Durchgangsöffnung (21) des Befestigungskörpers (20) und andererseits im Möbel (110) aufgenommen ist.

7. Möbelbeschlag (101) nach einem der Ansprüche 1 bis 6, **dadurch gekennzeichnet, dass** die Verbindungselementbereiche (4, 5) des Verbindungselements (1) ein Gewinde (7, 8) aufweisen, wobei vorzugsweise vorgesehen ist, dass das wenigstens eine Anschlagelement (2, 3) im Gewinde (7, 8) bewegbar gelagert ist.

8. Möbelbeschlag (101) nach einem der Ansprüche 1 bis 7, **dadurch gekennzeichnet, dass** das wenigstens eine Anschlagelement (2, 3) als Sprengring ausgebildet ist.

9. Möbelbeschlag (101) nach einem der Ansprüche 1 bis 8, **dadurch gekennzeichnet, dass** das wenigstens eine Anschlagelement (2, 3) jeweils zwischen einem der verbindungselementfesten Anschläge (11, 12) einerseits und der als Anschlag dienenden Möbelbeschlagsseite (102, 103) andererseits begrenzt bewegbar ist.

10. Möbelbeschlag (101) nach einem der Ansprüche 1 bis 9, **dadurch gekennzeichnet, dass** am Verbindungselement (1) zwei gesonderte Werkzeugaufnahmen (13, 14) ausgebildet sind, wobei vorzugsweise die Werkzeugaufnahmen (13, 14) als Schlitz oder Kreuzschlitz oder Innensechskant oder Innensechsrund ausgebildet sind.

11. Möbelbeschlag (101) nach einem der Ansprüche 1 bis 10, **dadurch gekennzeichnet, dass** der Befestigungskörper (20) im Wesentlichen vollständig im Möbelbeschlag (101) ausgebildet ist.

12. Möbel (110) mit wenigstens einem Möbelbeschlag (101) nach einem der Ansprüche 1 bis 11.

## Claims

1. A furniture fitting (101) for a piece of furniture (110) having at least one securing device (100) for securing a furniture fitting (101) to a piece of furniture (110), wherein the furniture fitting (101) can be secured to the piece of furniture with the securing device (100) selectively with a left-hand furniture fitting side (102) or a right-hand furniture fitting side (103), the furniture fitting (101) is in the form of an ejection device, a drive device, a retraction device or a damping device for a moveable furniture part (104) or an actuating drive (106) for a furniture flap (105) or a rail extension guide or a lighting device, and the securing device (100) comprising:
- a connecting element (1), wherein the connecting element (1) has two connecting element regions (4, 5) for securing the furniture fitting (101) to the piece of furniture (110), and
- a securing body (20) having a through opening (21), wherein the connecting element (1) is arranged at least partly in the through opening (21) and the connecting element (1) is moveable relative to the securing body (20),
wherein the connecting element (1) has at least one abutment element (2, 3) which is limitedly moveable relative to the connecting element (1), wherein the connecting element (1) has two ends (9, 10), wherein provided in the region of the two ends (9, 10) of the connecting element (1) are two abutments (11, 12) which are fixed with respect to the connecting element for the at least one abutment element (2, 3), **characterised in that** the abutments (11, 12) which are fixed with respect to the connecting element have abutment surfaces which are oriented substantially perpendicularly to the longitudinal axis of the connecting element (1).

2. The furniture fitting (101) as set forth in claim 1 **characterised in that** the at least one abutment element (2, 3) projects radially from the connecting element (1).

3. The furniture fitting (101) as set forth in claim 1 or claim 2 **characterised in that** the connecting element (1) has a longitudinal axis (6) and the at least one abutment element (2, 3) is limitedly moveable along the longitudinal axis (6) of the connecting element (1).

4. The furniture fitting (101) as set forth in one of claims 1 through 3 **characterised in that** the at least one abutment element (2, 3) can be releasably secured to the connecting element (1).

5. The furniture fitting (101) as set forth in one of claims 1 through 4 **characterised in that** the connecting element (1) extends substantially completely through the through opening (21) in the securing body (20).

6. The furniture fitting (101) as set forth in one of claims 1 through 5 **characterised in that** the connecting element (1) in the assembly condition is received on one side sunk in the through opening (21) of the securing body (20) and on the other side in the piece of furniture (110).

7. The furniture fitting (101) as set forth in one of claims 1 through 6 **characterised in that** the connecting element regions (4, 5) of the connecting element (1) have a thread (7, 8), preferably wherein the at least one abutment element (2, 3) is supported moveably in the thread (7, 8).

8. The furniture fitting (101) as set forth in one of claims 1 through 7 **characterised in that** the at least one abutment element (2, 3) is in the form of a retaining ring.

9. The furniture fitting (101) as set forth in one of claims 1 through 8 **characterised in that** the at least one abutment element (2, 3) is respectively limitedly moveable between one of the abutments (11, 12) which are fixed with respect to the connecting element on one side and the furniture fitting side (102, 103) serving as the abutment on the other side.

10. The furniture fitting (101) as set forth in one of claims 1 through 9 **characterised in that** two separate tool receiving means (13, 14) are provided on the connecting element (1), wherein preferably the tool receiving means (13, 14) are in the form of a slot or a cross slot or a hexagonal socket or a hexalobular socket.

11. The furniture fitting (101) as set forth in one of claims 1 through 10 **characterised in that** the securing body (20) is provided substantially completely in the furniture fitting (101).

12. A piece of furniture (110) having at least one furniture fitting (101) as set forth in one of claims 1 through 11.

## Revendications

1. Ferrure de meuble (101) pour un meuble (110) doté d'au moins un dispositif de fixation (100) destiné à fixer la ferrure de meuble (101) au meuble (110), dans laquelle la ferrure de meuble (101) peut être fixée avec le dispositif de fixation (100) sur le meuble (110) au choix avec un côté gauche de ferrure de meuble (102) ou un côté droit de ferrure de meuble (103), la ferrure de meuble (101) est conçue comme dispositif d'éjection, comme dispositif d'entraînement, comme dispositif convoyeur ou comme dispositif amortisseur pour une partie mobile de meuble (104) ou comme actionneur (106) pour une porte de meuble (105) ou comme glissière à rails télescopiques ou comme dispositif d'éclairage, et l'au moins un dispositif de fixation (100) comporte :
- un élément de raccordement (1), dans laquelle l'élément de raccordement (1) comporte deux régions d'élément de raccordement (4, 5) pour la fixation de la ferrure de meuble (101) au meuble (110), et
- un corps de fixation (20) doté d'une ouverture de passage (21), dans laquelle l'élément de raccordement (1) est au moins partiellement agencé dans l'ouverture de passage (21) et l'élément de raccordement (1) est mobile par rapport au corps de fixation (20),
dans laquelle l'élément de raccordement (1) comporte au moins un élément de butée (2, 3) mobile de façon limitée par rapport à l'élément de raccordement (1), dans laquelle l'élément de raccordement (1) comporte deux extrémités (9, 10) et deux butées (11, 12) fixes sur l'élément de raccordement sont disposées pour l'au moins un élément de butée (2, 3) dans la zone des deux extrémités de l'élément de raccordement (1), **caractérisée en ce que** les butées (11, 12) fixes sur l'élément de raccordement comportent des surfaces de butée, qui sont orientées perpendiculairement à l'axe longitudinal de l'élément de raccordement (1).

2. Ferrure de meuble (101) selon la revendication 1, **caractérisée en ce que** l'au moins un élément de butée (2, 3) dépasse radialement de l'élément de raccordement (1).

3. Ferrure de meuble (101) selon la revendication 1 ou 2, **caractérisée en ce que** l'élément de raccordement (1) comporte un axe longitudinal (6) et l'au moins un élément de butée (2, 3) est mobile de façon limitée le long de l'axe longitudinal (6) de l'élément de raccordement (1).

4. Ferrure de meuble (101) selon l'une des revendications 1 à 3, **caractérisée en ce que** l'au moins un élément de butée (2, 3) peut être fixé de manière détachable à l'élément de raccordement (1).

5. Ferrure de meuble (101) selon l'une des revendications 1 à 4, **caractérisée en ce que** l'élément de raccordement (1) s'étend essentiellement complètement à travers l'ouverture de passage (21) du corps de fixation (20).

6. Ferrure de meuble (101) selon l'une des revendications 1 à 5, **caractérisée en ce que**, dans l'état monté, l'élément de raccordement (1) est d'un côté enfoncé dans l'ouverture de passage (21) du corps de fixation (20) et pris dans le meuble (110) de l'autre côté.

7. Ferrure de meuble (101) selon l'une des revendications 1 à 6, **caractérisée en ce que** les régions d'élément de raccordement (4, 5) de l'élément de raccordement (1) comportent un filetage (7, 8), dans laquelle il est de préférence prévu que l'au moins un élément de butée (2, 3) soit disposé de façon mobile dans le filetage (7, 8).

8. Ferrure de meuble (101) selon l'une des revendications 1 à 7, **caractérisée en ce que** l'au moins un élément de butée (2, 3) est conçu comme anneau de retenue.

9. Ferrure de meuble (101) selon l'une des revendications 1 à 8, **caractérisée en ce que** l'au moins un élément de butée (2, 3) est mobile de façon limitée respectivement entre une des butées fixes sur l'élément de raccordement (11, 12) d'une part et le côté de ferrure de meuble (102, 103) faisant office de butée d'autre part.

10. Ferrure de meuble (101) selon l'une des revendications 1 à 9, **caractérisée en ce que** deux logements d'outil (13, 14) séparés sont disposés sur l'élément de raccordement (1), dans laquelle les logements d'outil (13, 14) sont de préférence formé en fente ou fentes croisées ou hexagonaux interne ou tête ronde ou hexagonale.

11. Ferrure de meuble (101) selon l'une des revendications 1 à 10, **caractérisée en ce que** le corps de fixation (20) est disposé essentiellement complètement dans la ferrure de meuble (101).

12. Meuble (110) doté d'au moins une ferrure de meuble (101) selon l'une des revendications 1 à 11.
